# EUROPEAN PATENT SPECIFICATION

(11) **EP 2 247 928 B1**
(45) Date of publication and mention of the grant of the patent: **12.03.2014**
(21) Application number: 09713998.4
(22) Date of filing: 26.01.2009
(51) Int. Cl.: F21K 99/00, F21V 23/04, F21Y 101/02

(54) **LIGHTING UNIT WITH PHOTOSENSOR**
BELEUCHTUNGSEINHEIT MIT LICHTSENSOR
UNITE D'ECLAIRAGE A PHOTOCAPTEUR

(30) Priority: 28.01.2008 US 24119
(43) Date of publication of application: 10.11.2010
(73) Proprietor: Koninklijke Philips N.V., 5656 AE Eindhoven (NL)
(72) Inventor: ASHDOWN, Ian, Briarcliff Manor New York 10510-8001 (US)
(74) Representative: Bekkers, Joost J.J.
(86) International application number: PCT/IB2009/050314
(87) International publication number: WO 2009/107003

(56) References cited:
- JP-A- 58 068 627
- JP-A- 2004 112 830
- US-A- 4 689 652
- US-A1- 2004 031 965
- US-A1- 2004 227 869
- US-A1- 2006 243 893
- US-A1- 2007 034 775

## Description

### Technical Field

The present invention is directed generally to the field of lighting. More particularly, various inventive methods and apparatus disclosed herein relate to a lighting unit with a photosensor.

### Background

Digital lighting technologies, i.e. illumination based on semiconductor light sources, such as light-emitting diodes (LEDs), offer a viable alternative to traditional fluorescent, HID, and incandescent lamps. Functional advantages and benefits of LEDs include high energy conversion and optical efficiency, durability, lower operating costs, and many others. Recent advances in LED technology have provided efficient and robust full-spectrum lighting sources that enable a variety of lighting effects in many applications. Some of the fixtures embodying these sources feature a lighting module, including one or more LEDs capable of producing different colors, e.g. red, green, and blue, as well as a processor for independently controlling the output of the LEDs in order to generate a variety of colors and color-changing lighting effects, for example, as discussed in detail in U.S. Patent Nos. 6,016,038 and 6,211,626.

Advances in the development and improvements of the luminous flux of light-emitting devices such as solid-state semiconductor and organic LEDs have made these devices suitable for use in general illumination applications, including architectural, entertainment, and roadway lighting. Light-emitting diodes are becoming increasingly competitive with light sources such as incandescent, fluorescent, and high-intensity discharge lamps. Also, with the increasing selection of LED wavelengths to choose from, white light and color changing luminaires are becoming more popular.

In general, a white light or color changing luminaire typically comprises different wavelength LEDs, such as red (R), green (G), blue (B) and optionally amber (A) LEDs and/or other color as may be desired. The color of the light output by the luminaire can be changed and/or optimised by altering the relative intensities of these different color LEDs.

One difficulty generally associated with white light or color changing luminaires, however, is that the output of each LED changes differently with changes in ambient and/or operating temperature. If the ratio of average drive currents in the LEDs is not changed to accommodate this situation, the combined output color of the luminaire may change by an often perceivable, and generally undesired, amount. Other factors that may affect the output color may include ageing of the LEDs and the luminaire's output intensity.

In various circumstances, it is desirable to monitor the light emitted by LEDs for such and/or other changes. In order to achieve a stable output color, that is an output color that remains substantially the same despite ambient and/or LED temperature changes, ageing of the LEDs, and/or variations in overall output intensity, it may be necessary to monitor the chromaticity of the combined LED outputs and, if desired, provide feedback to a controller thereof to substantially maintain a desired output color. Such feedback control may also be applicable to substantially maintain a desired luminaire luminous intensity, radiometric power, and the like, as well as maintain and/or optimise a luminaire's color quality and/or color rendering ability.

The following provide some examples of known luminaires having a feedback control system. For instance, one conventional light source includes LEDs, a photo-detector, and a collector. Each LED emits light in a forward direction and light in a side direction. A portion of the light emitted in the side direction is reflected onto the photo-detector by the collector. This light source however suffers from various drawbacks, for example, the light directed in the side direction needs to be redirected via reflection to reach the photo-detector, which due to reflective losses may reduce the amount of light directed towards the photo-detector. In addition, the light sensed by the photo-detector is also limited to that emitted in the side direction, which may vary in amount from chip to chip.

Document US 2006/024389 A1 describes a lighting unit with all the features of the preamble of claim 1 of the present invention.

Also known are optoelectronic devices including an integrated light emitting device (such as a vertical cavity surface emitting laser (VCSEL) or resonant cavity light emitting diode

(RCLED)) and a photodiode. Between the light emitting device and the photodiode is a transition region, wherein at least part of the transition region is shorted. A metal contact provides a contact to both the light emitting device and the photodiode. Another light source with an integrally formed photosensor according to the prior art is described as an organic light emitting device display including: a transparent electrode; a reflective electrode having a transparent window; a light emissive layer disposed between the transparent electrode and the reflective electrode; and a photosensor located under the transparent window of the reflective electrode to sense light produced by the light emissive layer. However, a drawback to photosensors that are integrally formed with the light emitting devices can result in a limitation of the types of light emitting devices useable to those compatible with integral forming with the photosensors, which can typically only allow for limited flexibility with respect to the location of the photosensors relative to these light emitting devices.

Also, a self-monitoring light source is known which includes a light source that generates light and a light monitor that receives a portion of the generated light, wherein the light source generates light that is directed to the optics. A first portion of the light is transmitted to an application, and a second portion of the light is reflected by the optics to the light monitor. As the light source and the light monitor are manufactured on the same semiconductor die, this self-monitoring light source suffers the same drawbacks as other integrally formed light sources, as well as also requiring reflection for the light to reach the photosensor.

Thus, there is a need in the art to provide an apparatus and method that can mitigate the amount of light manipulation required for sampling of the light emitted by a light source.

### Summary

The present disclosure is directed to inventive methods and apparatus for sampling light output from one or more light sources while limiting the amount of light manipulation required for this purpose. For example, by positioning a photosensor in the path of light propagation from the light source, the amount of light manipulation required for the sampling of the light is reduced.

The present invention relates to a lighting unit according to claim 1 of the appended claims.

As used herein for purposes of the present disclosure, the term "LED" should be understood to include any electroluminescent diode or other type of carrier injection/junction-based system that is capable of generating radiation in response to an electric signal. Thus, the term LED includes, but is not limited to, various semiconductor-based structures that emit light in response to current, light emitting polymers, organic light emitting diodes (OLEDs), electroluminescent strips, and the like. In particular, the term LED refers to light emitting diodes of all types (including semi-conductor and organic light emitting diodes) that may be configured to generate radiation in one or more of the infrared spectrum, ultraviolet spectrum, and various portions of the visible spectrum (generally including radiation wavelengths from approximately 400 nanometers to approximately 700 nanometers). Some examples of LEDs include, but are not limited to, various types of infrared LEDs, ultraviolet LEDs, red LEDs, blue LEDs, green LEDs, yellow LEDs, amber LEDs, orange LEDs, and white LEDs (discussed further below). It also should be appreciated that LEDs may be configured and/or controlled to generate radiation having various bandwidths (e.g., full widths at half maximum, or FWHM) for a given spectrum (e.g., narrow bandwidth, broad bandwidth), and a variety of dominant wavelengths within a given general color categorization.

For example, one implementation of an LED configured to generate essentially white light (e.g., a white LED) may include a number of dies which respectively emit different spectra of electroluminescence that, in combination, mix to form essentially white light. In another implementation, a white light LED may be associated with a phosphor material that converts electroluminescence having a first spectrum to a different second spectrum. In one example of this implementation, electroluminescence having a relatively short wavelength and narrow bandwidth spectrum "pumps" the phosphor material, which in turn radiates longer wavelength radiation having a somewhat broader spectrum.

It should also be understood that the term LED does not limit the physical and/or electrical package type of an LED. For example, as discussed above, an LED may refer to a single light emitting device having multiple dies that are configured to respectively emit different spectra of radiation (e.g., that may or may not be individually controllable). Also, an LED may be associated with a phosphor that is considered as an integral part of the LED (e.g., some types of white LEDs). In general, the term LED may refer to packaged LEDs, non-packaged LEDs, surface mount LEDs, chip-on-board LEDs, T-package mount LEDs, radial package LEDs, power package LEDs, LEDs including some type of encasement and/or optical element (e.g., a diffusing lens), etc.

The term "light source" should be understood to refer to any one or more of a variety of radiation sources, including, but not limited to, LED-based sources (including one or more LEDs as defined above), incandescent sources (e.g., filament lamps, halogen lamps), fluorescent sources, phosphorescent sources, high-intensity discharge sources (e.g., sodium vapor, mercury vapor, and metal halide lamps), lasers, other types of electroluminescent sources, pyro-luminescent sources (e.g., flames), candle-luminescent sources (e.g., gas mantles, carbon arc radiation sources), photo-luminescent sources (e.g., gaseous discharge sources), cathode luminescent sources using electronic satiation, galvano-luminescent sources, crystallo-luminescent sources, kine-luminescent sources, thermo-luminescent sources, triboluminescent sources, sonoluminescent sources, radioluminescent sources, and luminescent polymers.

A given light source may be configured to generate electromagnetic radiation within the visible spectrum, outside the visible spectrum, or a combination of both. Hence, the terms "light" and "radiation" are used interchangeably herein. Additionally, a light source may include as an integral component one or more filters (e.g., color filters), lenses, or other optical components. Also, it should be understood that light sources may be configured for a variety of applications, including, but not limited to, indication, display, and/or illumination. An "illumination source" is a light source that is particularly configured to generate radiation having a sufficient intensity to effectively illuminate an interior or exterior space. In this context, "sufficient intensity" refers to sufficient radiant power in the visible spectrum generated in the space or environment (the unit "lumens" often is employed to represent the total light output from a light source in all directions, in terms of radiant power or "luminous flux") to provide ambient illumination (i.e., light that may be perceived indirectly and that may be, for example, reflected off of one or more of a variety of intervening surfaces before being perceived in whole or in part).

The term "spectrum" should be understood to refer to any one or more frequencies (or wavelengths) of radiation produced by one or more light sources. Accordingly, the term "spectrum" refers to frequencies (or wavelengths) not only in the visible range, but also frequencies (or wavelengths) in the infrared, ultraviolet, and other areas of the overall electromagnetic spectrum. Also, a given spectrum may have a relatively narrow bandwidth (e.g., a FWHM having essentially few frequency or wavelength components) or a relatively wide bandwidth (several frequency or wavelength components having various relative strengths). It should also be appreciated that a given spectrum may be the result of a mixing of two or more other spectra (e.g., mixing radiation respectively emitted from multiple light sources).

For purposes of this disclosure, the term "color" is used interchangeably with the term "spectrum." However, the term "color" generally is used to refer primarily to a property of radiation that is perceivable by an observer (although this usage is not intended to limit the scope of this term). Accordingly, the terms "different colors" implicitly refer to multiple spectra having different wavelength components and/or bandwidths. It also should be appreciated that the term "color" may be used in connection with both white and non-white light.

The term "color temperature" generally is used herein in connection with white light, although this usage is not intended to limit the scope of this term. Color temperature essentially refers to a particular color content or shade (e.g., reddish, bluish) of white light. The color temperature of a given radiation sample conventionally is characterized according to the temperature in degrees Kelvin (K) of a black body radiator that radiates essentially the same spectrum as the radiation sample in question. Black body radiator color temperatures generally fall within a range of from approximately 700 degrees K (typically considered the first visible to the human eye) to over 10,000 degrees K; white light generally is perceived at color temperatures above 1500-2000 degrees K.

Lower color temperatures generally indicate white light having a more significant red component or a "warmer feel," while higher color temperatures generally indicate white light having a more significant blue component or a "cooler feel." By way of example, fire has a color temperature of approximately 1,800 degrees K, a conventional incandescent bulb has a color temperature of approximately 2848 degrees K, early morning daylight has a color temperature of approximately 3,000 degrees K, and overcast midday skies have a color temperature of approximately 10,000 degrees K. A color image viewed under white light having a color temperature of approximately 3,000 degree K has a relatively reddish tone, whereas the same color image viewed under white light having a color temperature of approximately 10,000 degrees K has a relatively bluish tone.

The term "lighting fixture" is used herein to refer to an implementation or arrangement of one or more lighting units in a particular form factor, assembly, or package. The term "lighting unit" is used herein to refer to an apparatus including one or more light sources of same or different types. A given lighting unit may have any one of a variety of mounting arrangements for the light source(s), enclosure/housing arrangements and shapes, and/or electrical and mechanical connection configurations. Additionally, a given lighting unit optionally may be associated with (e.g., include, be coupled to and/or packaged together with) various other components (e.g., control circuitry) relating to the operation of the light source(s). An "LED-based lighting unit" refers to a lighting unit that includes one or more LED-based light sources as discussed above, alone or in combination with other non LED-based light sources. A "multi-channel" lighting unit refers to an LED-based or non LED-based lighting unit that includes at least two light sources configured to respectively generate different spectrums of radiation, wherein each different source spectrum may be referred to as a "channel" of the multi-channel lighting unit.

The term "controller" is used herein generally to describe various apparatus relating to the operation of one or more light sources. A controller can be implemented in numerous ways (e.g., such as with dedicated hardware) to perform various functions discussed herein. A "processor" is one example of a controller which employs one or more microprocessors that may be programmed using software (e.g., microcode) to perform various functions discussed herein. A controller may be implemented with or without employing a processor, and also may be implemented as a combination of dedicated hardware to perform some functions and a processor (e.g., one or more programmed microprocessors and associated circuitry) to perform other functions. Examples of controller components that may be employed in various embodiments of the present disclosure include, but are not limited to, conventional microprocessors, application specific integrated circuits (ASICs), and field-programmable gate arrays (FPGAs).

In various implementations, a processor or controller may be associated with one or more storage media (generically referred to herein as "memory," e.g., volatile and non-volatile computer memory such as RAM, PROM, EPROM, and EEPROM, floppy disks, compact disks, optical disks, magnetic tape, etc.). In some implementations, the storage media may be encoded with one or more programs that, when executed on one or more processors and/or controllers, perform at least some of the functions discussed herein. Various storage media may be fixed within a processor or controller or may be transportable, such that the one or more programs stored thereon can be loaded into a processor or controller so as to implement various aspects of the present invention discussed herein. The terms "program" or "computer program" are used herein in a generic sense to refer to any type of computer code (e.g., software or microcode) that can be employed to program one or more processors or controllers.

The term "addressable" is used herein to refer to a device (e.g., a light source in general, a lighting unit or fixture, a controller or processor associated with one or more light sources or lighting units, other non-lighting related devices, etc.) that is configured to receive information (e.g., data) intended for multiple devices, including itself, and to selectively respond to particular information intended for it. The term "addressable" often is used in connection with a networked environment (or a "network," discussed further below), in which multiple devices are coupled together via some communications medium or media.

In one network implementation, one or more devices coupled to a network may serve as a controller for one or more other devices coupled to the network (e.g., in a master/slave relationship). In another implementation, a networked environment may include one or more dedicated controllers that are configured to control one or more of the devices coupled to the network. Generally, multiple devices coupled to the network each may have access to data that is present on the communications medium or media; however, a given device may be "addressable" in that it is configured to selectively exchange data with (i.e., receive data from and/or transmit data to) the network, based, for example, on one or more particular identifiers (e.g., "addresses") assigned to it.

The term "network" as used herein refers to any interconnection of two or more devices (including controllers or processors) that facilitates the transport of information (e.g. for device control, data storage, data exchange, etc.) between any two or more devices and/or among multiple devices coupled to the network. As should be readily appreciated, various implementations of networks suitable for interconnecting multiple devices may include any of a variety of network topologies and employ any of a variety of communication protocols. Additionally, in various networks according to the present disclosure, any one connection between two devices may represent a dedicated connection between the two systems, or alternatively a non-dedicated connection. In addition to carrying information intended for the two devices, such a non-dedicated connection may carry information not necessarily intended for either of the two devices (e.g., an open network connection). Furthermore, it should be readily appreciated that various networks of devices as discussed herein may employ one or more wireless, wire/cable, and/or fiber optic links to facilitate information transport throughout the network.

The term "user interface" as used herein refers to an interface between a human user or operator and one or more devices that enables communication between the user and the device(s). Examples of user interfaces that may be employed in various implementations of the present disclosure include, but are not limited to, switches, potentiometers, buttons, dials, sliders, a mouse, keyboard, keypad, various types of game controllers (e.g., joysticks), track balls, display screens, various types of graphical user interfaces (GUIs), touch screens, microphones and other types of sensors that may receive some form of human-generated stimulus and generate a signal in response thereto.

It should be appreciated that all combinations of the foregoing concepts and additional concepts discussed in greater detail below (provided such concepts are not mutually inconsistent) are contemplated as being part of the inventive subject matter disclosed herein. In particular, all combinations of claimed subject matter appearing at the end of this disclosure are contemplated as being part of the inventive subject matter disclosed herein. It should also be appreciated that terminology explicitly employed herein that also may appear in any disclosure incorporated by reference should be accorded a meaning most consistent with the particular concepts disclosed herein.

### Brief Description of the Drawings

In the drawings, like reference characters generally refer to the same parts throughout the different views. Also, the drawings are not necessarily to scale, emphasis instead generally being placed upon illustrating the principles of the invention.
FIG. 1 illustrates a schematic of a lighting unit comprising a photosensor, in accordance with an embodiment of the present invention;
FIG. 2 illustrates a cross section of a lighting unit comprising a photosensor, in accordance with another embodiment of the present invention;
FIG. 3 illustrates a cross section of a lighting unit comprising a photosensor, in accordance with an embodiment of the present invention;
FIG. 4 illustrates a cross section of a lighting unit comprising a photosensor, in accordance with another embodiment of the present invention;
FIG. 5 illustrates a cross section of a lighting unit comprising a photosensor, in accordance with a further embodiment of the present invention;

### Detailed Description

Applicants have recognized and appreciated that it would be beneficial to reduce the amount of light manipulation required for the sampling of light emitted by a light source. For example, by positioning a photosensor in the path of light propagation from the light source, the amount of light manipulation required for the sampling thereof can be reduced.

In view of the foregoing, various embodiments and implementations of the present invention are directed to methods and apparatus for sampling light output from one or more light sources while limiting light manipulation required for this purpose.

The present invention is generally implemented as a lighting unit having a photosensor. In particular, a lighting unit is described as comprising one or more light sources which are configured to generate light, together with one or more photosensors. The one or more photosensors are supported by a substantially transparent structure such that they are distanced from the one or more light sources, wherein a greater portion of the light emitted by said one or more light sources is substantially transmitted through said structure and optionally one or more of the photosensors, and wherein a lesser portion of the light is sampled by said one or more photosensors for sensing thereof.

In general, the substantially transparent structure and one or more photosensors are configured to leave a substantial amount of the light emitted by the one or more light sources unblocked, with a portion of the light incident upon the one or more photosensors.

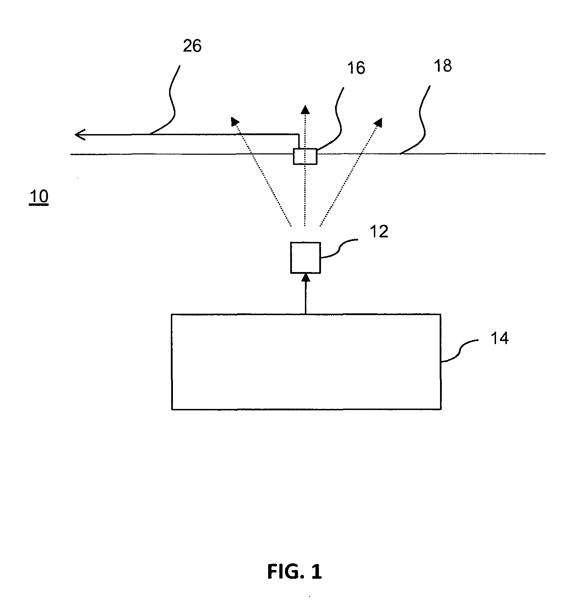

A lighting unit according to an embodiment of the present invention is schematically illustrated as lighting unit **10** in **FIG. 1****.** The lighting unit **10** generally includes one or more light sources **12** which are configured to generate light. The lighting unit **10** further includes one or more photosensors **16** and a substantially transparent structure **18** for supporting said photosensors. The one or more photosensors may provide an output signal **26** representative of the output of the one or more light sources. Light that is emitted by the one or more light sources and incident upon the structure is substantially transmitted therethrough with a portion of light emitted by the one or more light sources incident upon the one or more photosensors. In general, the one or more photosensors are configured so as to sample a small amount of the light emitted by the one or more light sources. In addition, the lighting unit **10** may include a drive system **14** which can provide appropriate drive signals to the one or more light sources for operation thereof.

### Light Source(s)

The lighting unit generally comprises one or more light sources. The one or more light sources, as defined above, may optionally be disposed within a package comprising, in various combinations, a housing, an output optics (*e.g*., a lens such as a hemispherical lens, a holographic optical element, a mirror, a filter, a coating, *etc.*), a drive circuitry and the like. In one embodiment, a light source is mounted to the lighting unit via a substrate operatively coupled to a drive circuitry configured to drive the light source. For instance, a light source may be coupled to a printed circuit board (PCB) or the like, which may either be specifically configured for driving a single light source, or configured for driving a group or array of light sources connected in various serial and/or parallel configurations.

Furthermore, in embodiments, the lighting unit comprises multiple light sources, each one of which may have a respective spectral power distribution or color. These may include different types of high intensity LEDs, and/or other types of LEDs or light sources. In one embodiment, the lighting unit comprises three or more light sources comprising a red light source, a green light source and a blue light source, wherein the combined outputs of which can be controllable to provide a desired colored or white light output. In another embodiment, the light source comprises four or more light sources comprising a red light source, an amber light source, a green light source and a blue light source, the combined outputs of which can again be controllable to provide a desired colored or white light output. Other such color combinations would be apparent to a worker skilled in the art.

In other embodiments, the lighting unit comprises one or more groups or arrays of light sources, each group or array having a respective spectral power distribution or color. These one or more groups or arrays may include different types of high intensity LEDs, and/or other types of LEDs or light sources. In one embodiment, the lighting unit comprises three or more groups or arrays of light sources comprising a group or array of red light sources, a group or array of green light sources and a group or array of blue light sources, the combined outputs of which can be controllable to provide a desired colored or white light output. In another embodiment, the lighting unit comprises four or more groups or arrays of light sources comprising a group or array of red light sources, a group or array of amber light sources, a group or array of green light sources and a group or array of blue light sources, the combined outputs of which can be controllable to provide a desired colored or white light output. Other such color combinations would be apparent to a worker skilled in the art.

In some embodiments, the lighting unit comprises one or more groups or arrays of multiple colored light sources. These one or more groups or arrays may include different types of high intensity LEDs, and/or other types of LEDs or light sources.

### Photosensor(s) and Supporting Structure

As mentioned above, in various embodiments, the lighting unit includes at least one photosensor supported by a substantially transparent structure distanced from the one or more light sources. Light that is emitted by the one or more light sources and incident upon the structure is substantially transmitted therethrough with a portion of light emitted by the one or more light sources incident upon and sampled by the one or more photosensors. In general, the one or more photosensors are configured so as to sample a small amount of the light emitted by the one or more light sources and thus the photosensor can generally be used to monitor an output of the one or more light sources. For example, in one embodiment the photosensor can be used for monitoring the degradation of phosphor-coated LEDs, for example long-term or medium-term degradation.

In some embodiments, the signals from the one or more photosensors which are representative of the output of one or more of the light sources can be used as part of an optional feedback control or drive system, described below. This format of drive and control system can provide a means for substantially maintaining a desired lighting unit output, or creating a desired lighting unit output for example.

In general, one or more photosensors may be used. In one embodiment, the output of each of the light sources is monitored via a single photosensor. In another embodiment, a separate photosensor is used for each type of light source, for example, the light generated by each color of light source is sampled by a separate photosensor.

A photosensor is an optical sensor which is configured to provide a means for converting detected light emissions into an electrical signal. For example a photosensor can be a broadband optical sensor, a narrow band optical sensor or other format of optical sensor as would be readily understood by a worker skilled in the art. Various techniques can be used to fabricate suitable photosensors for use in the present invention, as would be readily understood.

In some embodiments of the present invention, the one or more photosensors are configured as substantially transparent photosensors. This format of photosensor can provide a substantially minimum level of light absorption thereby. A substantially transparent photosensor can further be manufactured in a substantially easy manner using organic semiconductors and thus can be manufactured at a substantially low cost. Furthermore, this format of photosensor can be compatible with low-temperature plastic optics, for example.

In some embodiments of the present invention, a photosensor is a photodiode fabricated on a substantially transparent structure such as glass, alumina or plastic such as polymethyl methylacrylate (PMMA) using known techniques such as chemical vapour deposition, solution casting, spin coating, ink-jet printing and stamping of the semiconductor layers. The substantially transparent structure can be of various shapes and sizes depending on the configuration. In one embodiment the substantially transparent structure is positioned such that substantially all the lighting unit output passes therethrough.

In other embodiments, the substantially transparent structure can be sized for fabrication of the photosensor(s) alone. The electrodes can be opaque, semitransparent, and/or transparent. In some embodiments the electrodes for the photosensors can be vacuum deposited on the same structure, and connected to bond wires or other known electrical connectors.

An example of a suitable photosensor for use in some embodiments of the present invention is that presented by G. Naletto and P. Nicolosi in Proceedings of SPIE, Volume 2808, 1996, pages 605-612. A technique is disclosed for fabricating amorphous silicon thin film photodetectors at low cost on glass or substantially transparent plastic substrates using glow discharge techniques. In one embodiment, the spectral responsivity of these photosensors can be tuned over the range of the visible spectrum by varying the thickness of the thin film layers.

Another example of a photosensor amenable for use with some embodiments of the present invention is reported by J. Huang et al. in PCCP, 2006, Volume 8, pages 3904-3908, which discloses efficient polymer photodiodes fabricated on flexible transparent substrates.

A further example of an applicable photosensor for use with the present invention, was announced by NANOIDENT in July 2005, wherein organic photosensors comprising ultrathin layers of micro-structured electrodes and photoactive semiconductors processed in liquid form on a flexible foil like printing ink are disclosed. It will be understood that the above examples are intended to describe photosensors suitable for use with the present invention and are not intended to limit the invention in any way. Furthermore, a worker skilled in the art would readily understand other photosensor formats or configurations which would be applicable for use with the present invention.

In some embodiments of the present invention, the one or more photosensors and supporting structure are configured so that substantially all emitted light is incident thereupon, with a greater portion transmitted thereby, and a smaller portion incident upon and being sampled by the one or more photosensors. In one embodiment, the photosensors can be opaque, semi-transparent, substantially transparent, or a combination thereof, which can enable some of the light incident upon the photosensor to be transmitted thereby, rather than being blocked or sampled by the photosensor.

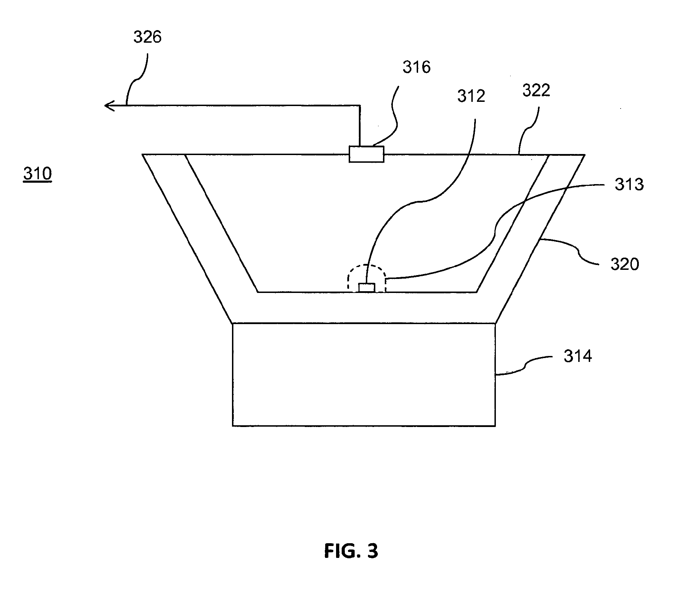

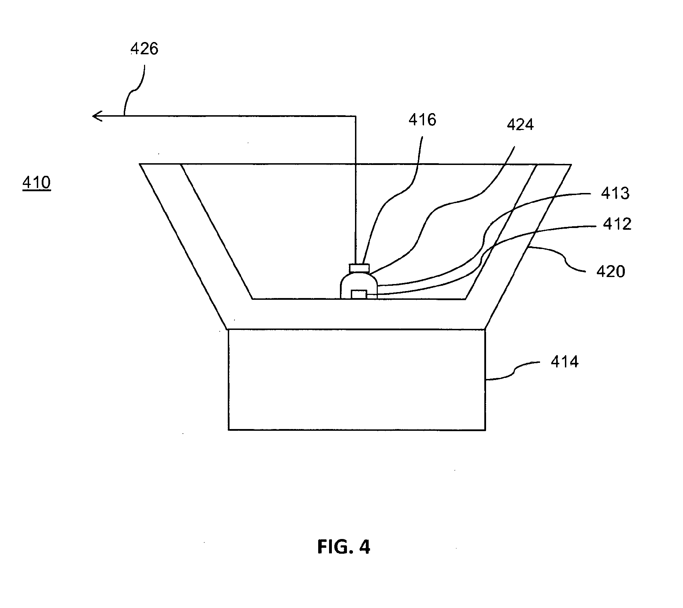

In some embodiments, the substantially transparent structure is configured as an optical component of the light source such as a lens, mirror, filter and/or holographic optical element. For example, the one or more photosensors can be located on the LED package optics, for example as illustrated in FIG. 4, or they can be located on the lighting unit housing optics, for example as illustrated in FIG. 3.

In some embodiments, the one or more photosensors and supporting structure are configured so that only some of the light emitted by the light sources is incident thereupon. For example, in this embodiment, the substantially transparent structure could be in the form of a strip, band, bar, or the like, wherein this structure partially intersects the light emitted by the one or more light soucess, thereby enabling a reduction in the relative amount of light that is transmitted through the structure..

In embodiments of the present invention, the one or more photosensors are positioned so that a portion of the light emitted by the one or more light sources is unreflectedly incident thereupon. For example, the one or more photosensors are positioned so that no redirection via reflection is required for a portion of the light emitted by the one or more light sources to reach the photosensors. As would be understood, while some light may be reflected within the lighting unit, for example by the outer surface of the photosensors or the supporting structure, there can remain a portion of the light emitted by the one or more light sources which reaches the photosensors and is thus incident thereupon without requiring redirection via reflection between the light sources and the photosensors. In this manner a lighting unit with a photosensor can be described that does not require a separate optical coupling means, for example an optical coupling means to redirect via reflection the light emitted by the one or more light sources to the photosensor, is not required.

In the embodiments, a photosensor is located substantially coaxially with the one or more light sources; for example the photosensor may be positioned coaxially with respect to the optical path of the one or more light sources. These embodiments of the present invention can be particularly useful for light sources where the spectral power distribution varies with viewing angle. For example, some light sources, such as phosphor-coated light-emitting diodes, have spectral power distributions that may vary with the viewing angle with respect to the optical axis of the LED, wherein this variation may cause inaccuracies with regard to light sampling depending on the relative position between the photosensor and the one or more light sources.

In some embodiments, the photosensor is positioned relative to the one or more light sources in order to avoid potential damage to the photosensor due to actinic radiation, for example, which typically includes electromagnetic radiation with wavelengths less than about 450 nm, which can be emitted by the light sources. For example, in a lighting unit comprising ultraviolet light sources, for example ultraviolet LEDs, and an organic semiconductor photosensor, for example, the distance between the photosensor and the light sources can be chosen to be greater than that at which the radiant flux density may exceed the damage threshold of the photosensor. In some embodiments the photosensor is positioned on the surface facing away from the one or more light sources of a substantially transparent structure, wherein the structure can be substantially opaque to actinic radiation.

In other embodiments, the one or more photosensors are hermetically sealed from the environment by a substantially transparent cover or passivating layer of organic or inorganic material. In some embodiments the substantially transparent cover or passivating layer has a spectral transmittance that is similar to the spectral power distribution of the one or more light sources and thereby may serve to absorb extraneous light that is not emitted by the light sources.

In some embodiments of the present invention, analog and/or digital support electronics are fabricated on the same substantially transparent structure and can be configured to optionally amplify, filter, and/or digitize, or other form of manipulation of the photocurrent generated by the photosensors. These support electronics can be fabricated, in some embodiments, using the same processes used to fabricate the photosensors, for example.

### Optional Output Control

In some embodiments, if desired, the photosensors can be used to aid in controlling the lighting unit output. In general, the lighting unit comprises one or more light sources, the output of which contributes to the overall optical output of the lighting unit. By monitoring the output of the one or more light sources, a controlled lighting unit output may be achieved. For instance, in some embodiments, various output parameters that may be considered for optional control include, but are not limited to, radiometric output power, luminous flux output, and the like, as well as chromaticity, color quality, correlated color temperature (CCT) and/or color rendering index of the light source among other parameters that would be readily understood by a person of skill in the art.

As presented above, the lighting unit comprises one or more photosensors configured to monitor the output of the one or more light sources. In general, the one or more photosensors are configured to generate electrical signals representative of the output of the one or more light sources. In some embodiments, if desired, these signals may be used by the drive system via a signal processor such as a controller, microcontroller, software and/or hardware device or other such control means as would be readily understood to assess an output of the lighting unit and adjust, when needed, the respective outputs of the one or more light sources in order to achieve a desired output.

In some embodiments, the lighting unit comprises two or more light sources, or groups or arrays thereof, each generally having a respective spectral power distribution. By combining the outputs of the two or more light sources, a combined overall spectral power distribution is provided which is generally determined by the sum of relative spectral contributions from each light source. As such, by controlling the respective output of the two or more light sources, an overall spectral power distribution of the lighting unit can be controlled.

In embodiments, the lighting unit comprises red (R), green (G) and blue (B) light sources configured to provide a controllable white or colored light output. In another embodiment, the lighting unit comprises red (R), amber (A), green (G) and blue (B) light sources configured to provide a controllable white or colored light output. Alternatively, other combinations of two, three, four or more light sources, or groups or arrays thereof, each producing light having respective spectral power distributions combinable to provide a selected, variable and/or optimised white or colored light output, may also be considered without departing from the general scope and nature of the present disclosure.

As stated above, the spectral power distribution of the lighting unit output can be changed and/or optimised by adjusting the relative output intensities of the light sources (*e.g*., RGB, RAGB, etc.). Consequently by monitoring the output of the lighting unit and/or of each light source, or group or array thereof, the output of the lighting unit may be controlled. Furthermore, since the output of each light source may change differently with changes in ambient and/or operating temperature, or again with ageing of a light source or other changes as would be readily understood, the output of the lighting unit and/or of each light source, group or array thereof, may further be monitored to detect such changes and if desired provide adequate compensation to substantially maintain a specific output.

Consequently, in some embodiments, in order to achieve a substantially stable output color, that is an output color that remains substantially the same despite ambient and/or device temperature changes, ageing of the light sources, and/or variations in overall output intensity, the chromaticity of the combined output of the light sources can be monitored via the one or more photosensors optically coupled thereto. Signals generated by the one or more photosensors may be used to provide feedback to a drive and control system, which can generally control the light sources (*e.g.*, via respective drivers and/or control circuitry) to substantially maintain a desired output color. Such optional feedback control may also be applicable, in various embodiments, to substantially maintain a desired luminous flux output, as well as maintain and/or optimise a color quality, CCT, chromaticity and/or color rendering index of the light source.

The invention will now be described with reference to specific examples. It will be understood that the following examples are intended to describe embodiments of the invention and are not intended to limit the invention in any way.

### Examples

### Example 1:

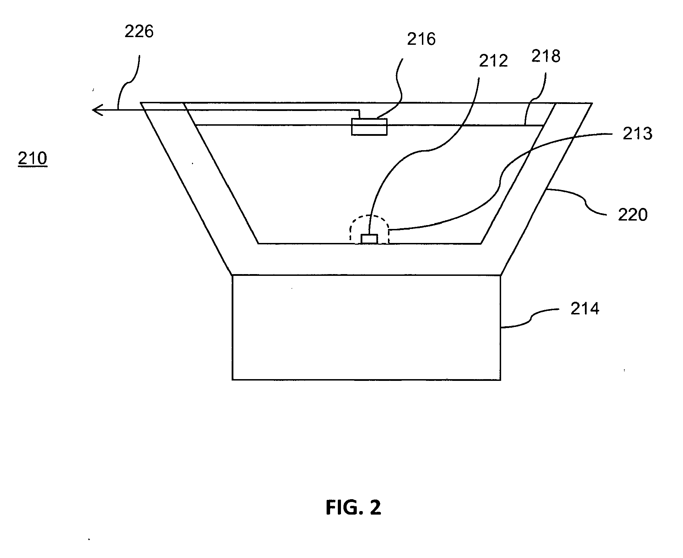

With reference to FIG. 2, a lighting unit, generally referred to using the numeral **210,** and in accordance with one embodiment of the present invention, will now be described. The lighting unit generally comprises one or more light sources **212** which are configured to generate light, and which are optionally located within a package **213,** a lighting unit housing **220** and a photosensor **216** (enlarged for clarity) for sensing the light emitted by the one or more light sources. The photosensor may provide an output signal **226** representative of the output of the one or more light sources. The photosensor is supported by a substantially transparent structure **218** distanced from the one or more light sources so that a portion of the light emitted by the one or more light sources is incident thereupon. The photosensor can be located on top of the substantially transparent structure, on the bottom of the substantially transparent structure, within the substantially transparent structure, or a combination thereof, as would be understood by a person of skill in the art. In this embodiment, the photosensor and supporting structure are configured so that substantially all light emitted by the light sources is incident thereupon, with a greater portion incident upon the substantially transparent structure, and a smaller portion incident upon the photosensor. In similar embodiments the substantially transparent structure may be configured so that only some of the light emitted by the light sources is incident thereupon, i.e. the substantially transparent structure can be in the form of a strip, band, bar, etc, only partially intersecting the light emitted by the one or more light sources. Light emitted by the one or more light sources and incident upon the structure is substantially transmitted therethrough with a portion of light emitted by the one or more light sources incident upon the photosensor. In this example the photosensor is located coaxially with the one or more light sources; in similar embodiments the photosensor may be located closer to the edge of the substantially transparent structure. The lighting unit can further comprise a drive system **214** for driving the one or more light sources.

In accordance with embodiments of the present invention, the one or more photosensors are configured as substantially transparent photosensors, the configuration of which can provide a substantially minimum level of light absorption thereby. In addition, a substantially transparent photosensor can further be manufactured in a substantially easy manner using organic semiconductors and thus can be manufactured at a substantially low cost. Furthermore, this format of photosensor can be compatible with low-temperature plastic optics, for example.

### Example 2:

With reference to FIG. 3, a lighting unit, generally referred to using the numeral **310,** and in accordance with one embodiment of the present invention, will now be described. The lighting unit generally comprises one or more light sources **312** which are optionally located within a package **313,** a drive system **314** for driving the one or more light sources, a lighting unit housing **320** and a photosensor **316** (enlarged for clarity) for sensing the light emitted by the one or more light sources. The photosensor may provide an output signal **326** representative of the output of the one or more light sources. The photosensor is supported by a substantially transparent structure **322** distanced from the one or more light sources so that a portion of the light emitted by the one or more light sources is incident thereupon. In this example the structure is the lighting unit housing optics. The photosensor can be located on top, on bottom, or within the lighting unit housing optics, or a combination thereof, as would be understood by a person of skill in the art. In this example the photosensor is located coaxially with the one or more light sources; in similar embodiments the photosensor may be located closer to the edge of the lighting unit housing optics. In some embodiments the output signal **326** is provided to the drive system **314** such that the photosensor provides feedback to the drive system based on the emitted light.

According to embodiments of the present invention, the one or more photosensors are configured as substantially transparent photosensors, the configuration of which can provide a substantially minimum level of light absorption thereby. In addition, this format of photosensor can further be relatively easily manufactured using organic semiconductors at a substantially low cost and further can be compatible with low-temperature plastic optics, for example.

### Example 3:

With reference to FIG. 4, a lighting unit, generally referred to using the numeral **410,** and in accordance with one embodiment of the present invention, will now be described. The lighting unit generally comprises one or more light sources **412** located within a package **413,** a drive system **414** for driving the one or more light sources, a lighting unit housing **420** and a photosensor **416** (enlarged for clarity) for sensing the light emitted by the one or more light sources. The photosensor may provide an output signal **426** representative of the output of the one or more light sources. The photosensor is supported by a substantially transparent structure **424** distanced from the one or more light sources so that a portion of the light emitted by the one or more light sources is incident thereupon. In this example the structure is the package optics. The photosensor can be located on top, on bottom, or within the package optics, or a combination thereof, as would be understood by a person of skill in the art.

For embodiments of the present invention, the one or more photosensors are configured as substantially transparent photosensors, the configuration of which can provide a substantially minimum level of light absorption thereby. In addition, this format of photosensor can further be relatively easily manufactured using organic semiconductors at a substantially low cost and further can be compatible with low-temperature plastic optics, for example.

### Example 4:

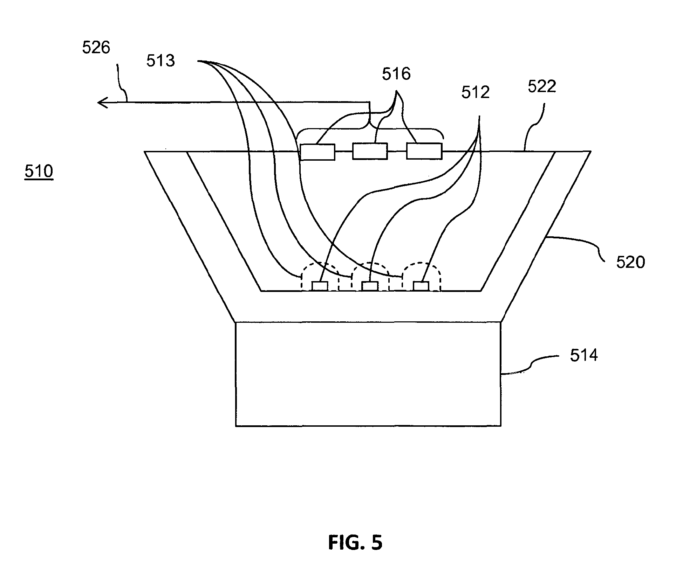

With reference to FIG. 5, a lighting unit, generally referred to using the numeral **510,** and in accordance with one embodiment of the present invention, will now be described. In this example the lighting unit generally comprises three sets of one or more light sources **512** which are optionally located within packages **513,** a drive system **514** for driving the three sets of one or more light sources, a lighting unit housing **520** and three photosensors **516** (enlarged for clarity) for sensing the light emitted by the three sets of one or more light sources. The photosensors may provide an output signal **526** representative of the output of the one or more light sources. The photosensors are supported by a substantially transparent structure **522** distanced from the light sources so that a portion of the emitted light is incident thereupon. In this example the structure is the lighting unit housing optics. The photosensors can be located on top, on bottom, or within the lighting unit housing optics, or a combination thereof, as would be understood by a person of skill in the art. In some embodiments each of the three sets of one or more light sources emits a different color of light and each photosensor is used for a specific type of light source. In some embodiments the output signal **526** is provided to the drive system **514** such that the photosensors provide feedback to the drive system based on the emitted light. In some embodiments each of the three sets of one or more light sources emits a different color of light and each photosensor is used for a specific type of light source.

According to various embodiments of the present invention, the one or more photosensors are configured as substantially transparent photosensors, the configuration of which can provide a substantially minimum level of light absorption thereby. In addition, this format of photosensor can be fabricated at a substantially low cost and relatively easily manufactured using organic semiconductors. In addition, substantially transparent photosensors can be compatible with low-temperature plastic optics, for example.

While several inventive embodiments have been described and illustrated herein, those of ordinary skill in the art will readily envision a variety of other means and/or structures for performing the function and/or obtaining the results and/or one or more of the advantages described herein, and each of such variations and/or modifications is deemed to be within the scope of the inventive embodiments described herein. More generally, those skilled in the art will readily appreciate that all parameters, dimensions, materials, and configurations described herein are meant to be exemplary and that the actual parameters, dimensions, materials, and/or configurations will depend upon the specific application or applications for which the inventive teachings is/are used. Those skilled in the art will recognize, or be able to ascertain using no more than routine experimentation, many equivalents to the specific inventive embodiments described herein. It is, therefore, to be understood that the foregoing embodiments are presented by way of example only and that, within the scope of the appended claims and equivalents thereto, inventive embodiments may be practiced otherwise than as specifically described and claimed. Inventive embodiments of the present disclosure are directed to each individual feature, system, article, material, kit, and/or method described herein. In addition, any combination of two or more such features, systems, articles, materials, kits, and/or methods, if such features, systems, articles, materials, kits, and/or methods are not mutually inconsistent, is included within the inventive scope of the present disclosure.

All definitions, as defined and used herein, should be understood to control over dictionary definitions, definitions in documents incorporated by reference, and/or ordinary meanings of the defined terms.

The indefinite articles "a" and "an," as used herein in the specification and in the claims, unless clearly indicated to the contrary, should be understood to mean "at least one." The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of" or "exactly one of," or, when used in the claims, "consisting of," will refer to the inclusion of exactly one element of a number or list of elements.

As used herein in the specification and in the claims, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified. Thus, as a non-limiting example, "at least one of A and B" (or, equivalently, "at least one of A or B," or, equivalently "at least one of A and/or B") can refer, in one embodiment, to at least one, optionally including more than one, A, with no B present (and optionally including elements other than B); in another embodiment, to at least one, optionally including more than one, B, with no A present (and optionally including elements other than A); in yet another embodiment, to at least one, optionally including more than one, A, and at least one, optionally including more than one, B (and optionally including other elements); etc.

It should also be understood that, unless clearly indicated to the contrary, in any methods claimed herein that include more than one step or act, the order of the steps or acts of the method is not necessarily limited to the order in which the steps or acts of the method are recited.

In the claims, as well as in the specification above, all transitional phrases such as "comprising," "including," "carrying," "having," "containing," "involving," "holding," "composed of," and the like are to be understood to be open-ended, i.e., to mean including but not limited to. Only the transitional phrases "consisting of" and "consisting essentially of" shall be closed or semi-closed transitional phrases, respectively. Also, the reference numerals in the claims are merely for convenience and are not to be read in any way as limiting.

## Claims

1. A lighting unit (10) comprising:
one or more light sources (12) configured to emit light;
one or more photosensors (16); and
a substantially transparent structure (18) distanced from the one or more light sources (12), the structure (18) configured to support the one or more photosensors (16), wherein a first portion of the light emitted by the one or more light sources (12) is substantially transmitted through the structure (18) and wherein a second portion of the light is sampled by the one or more photosensors (16) for sensing of the light;
**characterized in that** the one or more photosensors (16) are configured as substantially transparent photosensors and are supported by the substantially transparent structure (18), said one or more photosensors (16) are located substantially coaxially with said one or more light sources (12) without requiring optical coupling means between said one or more photosensors and said one or more light sources, and the one or more of the photosensors (16) includes at least a partially transparent electrode.

2. The lighting unit (10) of claim 1, wherein one or more of the photosensors (16) is an amorphous silicon thin film photodetector, a polymer photodiode or an organic photosensor.

3. The lighting unit (10) of claim 1, wherein the substantially transparent structure (18) is configured as an optical component of the light source (12).

4. The lighting unit (10) of claim 5, wherein at least one of the light sources (12) is an LED including package optics and the substantially transparent structure (18) is at least a portion of the package optics.

5. The lighting unit (10) of claim 1, wherein the substantially transparent structure (18) is configured such that substantially all of the light emitted by the one or more light sources (12) is incident thereon.

6. The lighting unit (10) of claim 1, wherein one of the photosensors (16) is configured to sample the light emitted a predetermined light source (12) or a predetermined group of light sources (12).

7. The lighting unit (10) of claim 1, wherein one of the photosensors (16) is configured to sample a particular color of light.

8. The lighting unit (10) of claim 1,
wherein the distance between the one or more photosensors and the one or more light sources can be chosen to be greater than that at which the radiant flux density may exceed the damage threshold of the one or more photosensors;
and wherein the one or more photosensors are positioned on the surface facing away from the one or more light sources of a substantially transparent structure (18).

## Patentansprüche

1. Beleuchtungseinheit (10) mit:
einer oder mehreren Lichtquellen (12), die so ausgeführt sind, dass sie Licht abstrahlen;
einem oder mehreren Photosensoren (16); sowie
einer von der einen oder den mehreren Lichtquellen (12) beabstandeten, im Wesentlichen transparenten Struktur (18), die so ausgeführt ist, dass sie den einen oder die mehreren Photosensoren (16) trägt,
wobei ein erster Teil des von der einen oder den mehreren Lichtquellen (12) abgestrahlten Lichts im Wesentlichen durch die Struktur (18) übertragen wird, und wobei ein zweiter Teil des Lichts von dem einen oder den mehreren Photosensoren (16) abgetastet wird, um das Licht wahrzunehmen;
**dadurch gekennzeichnet, dass** der eine oder die mehreren Photosensoren (16) als im Wesentlichen transparente Photosensoren konfiguriert sind und von der im Wesentlichen transparenten Struktur (18) getragen werden, wobei der eine oder die mehreren Photosensoren (16) im Wesentlichen koaxial mit der einen oder den mehreren Lichtquellen (12) angeordnet sind, ohne dass optische Kopplungsmittel zwischen dem einen oder den mehreren Photosensoren und der einen oder den mehreren Lichtquellen erforderlich sind, und wobei der eine oder die mehreren Photosensoren (16) zumindest eine teilweise transparente Elektrode enthalten.

2. Beleuchtungseinheit (10) nach Anspruch 1, wobei es sich bei einem oder mehreren der Photosensoren (16) um einen Dünnfilm-Photodetektor aus amorphem Silicium, eine Polymer-Photodiode oder einen organischen Photosensor handelt.

3. Beleuchtungseinheit (10) nach Anspruch 1, wobei die im Wesentlichen transparente Struktur (18) als eine optische Komponente der Lichtquelle (12) konfiguriert ist.

4. Beleuchtungseinheit (10) nach Anspruch 5, wobei mindestens eine der Lichtquellen (12) eine LED mit Paketoptik ist und die im Wesentlichen transparente Struktur (18) zumindest einen Teil der Paketoptik darstellt.

5. Beleuchtungseinheit (10) nach Anspruch 1, wobei die im Wesentlichen transparente Struktur (18) so ausgeführt ist, dass im Wesentlichen sämtliches von der einen oder den mehreren Lichtquellen (12) abgestrahltes Licht auf diese auffällt.

6. Beleuchtungseinheit (10) nach Anspruch 1, wobei einer der Photosensoren (16) so eingerichtet ist, dass er das von einer vorher festgelegten Lichtquelle (12) oder einer vorher festgelegten Gruppe von Lichtquellen (12) abgestrahlte Licht abtastet.

7. Beleuchtungseinheit (10) nach Anspruch 1, wobei einer der Photosensoren (16) so eingerichtet ist, dass er eine bestimmte Lichtfarbe abtastet.

8. Beleuchtungseinheit (10) nach Anspruch 1,
wobei der Abstand zwischen dem einen oder den mehreren Photosensoren und der einen oder den mehreren Lichtquellen so gewählt werden kann, dass er größer als dieser ist, bei dem die Strahlungsflussdichte die Schadensschwelle des einen oder der mehreren Photosensoren überschreiten kann,
und wobei der eine oder die mehreren Photosensoren auf der von der einen oder den mehreren Lichtquellen abgewandten Oberfläche einer im Wesentlichen transparenten Struktur (18) positioniert sind.

## Revendications

1. Unité d'éclairage (10), comprenant :
une ou de multiples sources lumineuses (12) configurées pour émettre de la lumière ;
un ou de multiples photo-capteurs (16) ; et
une structure sensiblement transparente (18) éloignée de la ou des multiples sources lumineuses (12), la structure (18) étant configurée pour supporter le ou les multiples photo-capteurs (16),
dans laquelle une première partie de la lumière émise par la ou les multiples sources lumineuses (12) est sensiblement transmise à travers la structure (18) et dans laquelle une seconde partie de la lumière est échantillonnée par le ou les multiples photo-capteurs (16) pour la détection de la lumière ;
**caractérisé en ce que** le ou les multiples photo-capteurs (16) sont configurés sous forme de photo-capteurs sensiblement transparents et sont supportés par la structure sensiblement transparente (18), ledit ou lesdits multiples photo-capteurs (16) sont situés de façon sensiblement coaxiale avec ladite ou lesdites multiples sources lumineuses (12) sans nécessiter de moyen de couplage optique entre ledit ou lesdits multiples photo-capteurs et ladite ou lesdites multiples sources lumineuses, et le ou les multiples des photo-capteurs (16) comprennent au moins une électrode partiellement transparente.

2. Unité d'éclairage (10) selon la revendication 1, dans laquelle un ou de multiples des photo-capteurs (16) sont un photo-détecteur à film mince de silicium amorphe, une photodiode polymère ou un photo-capteur organique.

3. Unité d'éclairage (10) selon la revendication 1, dans laquelle la structure sensiblement transparente (18) est configurée sous forme de composant optique de la lumière source (12).

4. Unité d'éclairage (10) selon la revendication 5, dans laquelle au moins une des sources lumineuses (12) est une LED comprenant des optiques de boîtier et la structure sensiblement transparente (18) est au moins une partie des optiques de boîtier.

5. Unité d'éclairage (10) selon la revendication 1, dans laquelle la structure sensiblement transparente (18) est configurée de sorte que sensiblement la totalité de la lumière émise par la ou les multiples sources lumineuses (12) soit incidente sur celle-ci.

6. Unité d'éclairage (10) selon la revendication 1, dans laquelle un des photo-capteurs (16) est configuré pour échantillonner la lumière émise par une source lumineuse prédéterminée (12) ou un groupe prédéterminé de sources lumineuses (12).

7. Unité d'éclairage (10) selon la revendication 1, dans laquelle un des photo-capteurs (16) est configuré pour échantillonner une couleur particulière de lumière.

8. Unité d'éclairage (10) selon la revendication 1,
dans laquelle la distance entre le ou les multiples photo-capteurs et la ou les multiples sources lumineuses peut être choisie pour être supérieure à celle à laquelle la densité de flux d'énergie rayonnante peut dépasser le seuil d'endommagement du ou des multiples photo-capteurs ;
et dans laquelle le ou les multiples photo-capteurs sont positionnés sur la surface orientée dans une direction opposée à la ou aux multiples sources lumineuses d'une structure sensiblement transparente (18).
